# FASCICULE DE BREVET EUROPEEN

(11) **EP 2 643 961 B1**
(45) Date de publication et mention de la délivrance du brevet: **30.05.2018**
(21) Numéro de dépôt: 11799762.7
(22) Date de dépôt: 21.11.2011
(51) Int. Cl.: H04L 29/08, G06F 17/30, G06F 9/46, G06F 9/54, G06F 9/52

(54) **COMMUNICATION ENTRE DEUX APPLICATIONS WEB**
KOMMUNIKATION ZWISCHEN ZWEI WEB APPLIKATIONEN
COMMUNICATION BETWEEN TWO WEB APPLICATIONS

(30) Priorité: 23.11.2010 FR 1059655
(43) Date de publication de la demande: 02.10.2013
(73) Titulaire: Orange, 75015 Paris (FR)
(72) Inventeur: GIRAUD, Jérôme, F-14000 Caen (FR); HELIOT, Mathieu, F-14000 Caen (FR)
(86) Numéro de dépôt international: PCT/FR2011/052716
(87) Numéro de publication internationale: WO 2012/069748

(56) Documents cités:
- WO-A1-2008/152296
- WO-A1-2009/018375
- WO-A2-2009/029404
- US-A1- 2003 061 395
- US-A1- 2007 299 857
- US-A1- 2009 037 517
- US-A1- 2009 299 862
- US-A1- 2009 327 421
- US-A1- 2010 169 895
- DATABASE EPODOC EUROPEAN PATENT OFFICE, THE HAGUE, NL; 23 décembre 2009 (2009-12-23), XP002655414, & CN 101 610 195 A (SHANGHAI KOAL SOFTWARE CO LTD [CN]) 23 décembre 2009 (2009-12-23)

## Description

La présente invention se rapporte de manière générale à la communication de données entre modules logiciels, et plus particulièrement à l'échange de données entre applications Web chargées dans un même navigateur.

De nombreux services sont aujourd'hui mis à disposition d'un utilisateur par l'intermédiaire d'applications web, dont les pages sont accessibles à l'aide d'un navigateur. Or il serait particulièrement avantageux de partager efficacement des informations, propres à l'utilisateur, entre les pages de plusieurs applications web, notamment lorsque ces dernières sont hébergées sous différents domaines. Une page web appartenant au domaine « www.abc.fr » pourrait ainsi utilement exploiter, par exemple en l'affichant sous une forme adaptée, une partie des données, propres à un utilisateur, collectées par une autre page web appartenant au domaine « www.def.net ». De telles intercommunications entre différentes applications Web chargées dans un même navigateur sont connues des demandes de brevet US2007/299857, WO2009/029404, WO2009/018375 et CN101610195. Typiquement, une telle communication de données entre pages web ne peut être mise en oeuvre qu'en partageant l'accès à des bases de données communes. Cette approche n'est toutefois pas satisfaisante notamment lorsque les pages sont hébergées sous différents domaines et sont exploités par divers acteurs. En effet, une entité tierce doit alors intervenir, posant notamment des problèmes de performance, de configuration, de sécurité et d'adaptabilité.

Il existe donc un besoin pour partager des données entre les pages web d'une pluralité d'applications web, notamment lorsque ces dernières appartiennent à différents domaines, sans recourir à une entité distante, c'est-à-dire localisée hors de l'ordinateur utilisé pour accéder auxdites pages web.

La présente invention vise à améliorer la situation.

Selon un premier aspect, il est proposé un procédé de communication entre une première application Web associée à un premier domaine de navigation et une deuxième application Web associée à un deuxième domaine de navigation, différent du premier domaine de navigation, les premières et deuxièmes applications étant mises en oeuvre au sein d'un navigateur accédant à une base de données locale, propre au navigateur, conçue pour enregistrer des données fournies par un module logiciel chargé dans ledit navigateur et pour interdire l'accès aux données enregistrées pour un module logiciel associé à un domaine de navigation à tout module logiciel chargé dans le navigateur qui n'est pas associé audit domaine de navigation,
le procédé comprenant:
- une étape de chargement et d'affichage concomitant d'au moins deux sous-pages d'une page Web initiale, une première sous-page étant utilisée pour afficher une interface utilisateur de la première application Web, une deuxième sous-page étant utilisée pour afficher une interface utilisateur de la deuxième application Web s'exécutant indépendamment de la première application Web,
- une étape de stockage, par un premier module logiciel de la première application Web, de données dans ladite base de données locale;
- une étape de lecture, par un deuxième module logiciel de la deuxième application Web, de données écrites dans ladite base de données locale par le premier module logiciel,
les premier et deuxième modules logiciels étant associés à un troisième domaine de navigation.

Le navigateur dispose d'un mode de stockage local sécurisé, puisque l'accès aux données stockées dans la base de données locale est seulement autorisé aux modules associés au même domaine que le module qui a procédé à l'enregistrement desdites données. Un tel mode de stockage local est notamment proposé dans les navigateurs web supportant le standard HTML5 décrit dans le document « HTML5 - A vocabulary and associated APIs for HTML and XHTML », W3C Working Draft, 4 March 2010.

La première application qui est associée à un premier domaine de navigation ne peut donc pas enregistrer dans la base de données un ensemble de données de sorte à ce que ce dernier soit accessible à la deuxième application associée à un deuxième domaine, lorsque celui-ci est distinct du premier domaine. C'est pourquoi, la première application utilise pour enregistrer des données, dans la base de données locale un premier module logiciel associé à un troisième domaine, tout comme le deuxième module logiciel, utilisé par la deuxième application.

Ainsi, les données enregistrées par le premier module logiciel peuvent être partagées en toute sécurité entre le premier module et le deuxième module, par l'intermédiaire de la base de données locale. Le partage de ces données ne nécessite donc pas l'usage d'une entité tierce hors du navigateur. De plus, l'ensemble de données étant stockée localement, aucun échange de données, coûteux en temps et en bande passante, n'est nécessaire. En outre, le procédé peut être mis en oeuvre en utilisant les fonctionnalités natives, offertes par le navigateur.

En outre, les deux sous-pages étant affichées concomitamment, il est possible de transférer des données d'un domaine Web à un autre ou d'un site Web à un autre, tout en permettant à l'utilisateur de visualiser le résultat de l'opération de transfert ou encore d'interagir à volonté et à tout moment sur une ou sur l'autre page selon le besoin.

L'invention simplifie considérablement pour l'utilisateur les transferts de données de page à page. Elle permet la réalisation d'une multitude de services, jeux, etc dans lesquels des données doivent être transférées de page à page.

Selon un premier mode de réalisation du procédé selon l'invention, le navigateur charge dynamiquement le premier, respectivement deuxième, module logiciel en raison de la présence dans la première, respectivement deuxième, sous-page Web d'une première, respectivement deuxième, d'une référence au troisième domaine de navigation. Le partage d'information entre les applications Web est possible grâce à la présence de ces références. Ce partage peut donc être mis en oeuvre de manière simple, par exemple lors de la conception de la page Web concernée.

Selon un deuxième mode de réalisation du procédé selon l'invention, un module logiciel de la première, respectivement deuxième, application insère la première, respectivement deuxième, référence dans la première, respectivement deuxième, sous-page Web.

Selon un mode de réalisation alternatif à ce deuxième mode de réalisation, la première, respectivement deuxième, référence est présente dans la première, respectivement deuxième, sous-page Web telle que chargée initialement par le navigateur.

Différents modes d'insertion de la première, respectivement deuxième, référence sont possibles: insertion statique dans la page telle que conçue ou bien insertion dynamique par un logiciel associé à l'application Web visée.

Selon un autre mode de réalisation du procédé selon l'invention, la première, respectivement deuxième, référence est une référence à une première respectivement deuxième, sous-page Web, contenant le code du premier respectivement deuxième, module logiciel, cette première respectivement deuxième, sous-page Web étant destinée à être chargée puis interprétée par le navigateur. L'invention est mise en oeuvre simplement par utilisation de technologies Web de référencement de sous-page au sein d'une page et chargement dynamique des sous-pages Web ainsi référencées.

Selon un autre mode de réalisation du procédé selon l'invention, tout ou partie des données enregistrées par le premier module logiciel dans ladite base de données sont extraites de données affichées dans la première sous-page. Selon un autre mode de réalisation du procédé selon l'invention, tout ou partie des données lues par le deuxième module logiciel dans ladite base de données sont affichées dans la deuxième sous-page. Le choix des données à transférer et/ou lire est libre, ce qui rend l'invention adaptable à tout type d'applications Web et permet d'optimiser la quantité de données à transférer en la limitant à ce qui est réellement nécessaire.

Selon un autre mode de réalisation du procédé selon l'invention, la première sous-page est destinée à être utilisée par un premier utilisateur et la deuxième sous-page est destinée à être utilisée par un deuxième utilisateur, distinct du premier utilisateur,
la première, respectivement deuxième, sous-page comprenant une interface utilisateur pour une saisie de données d'identification et/ou d'authentification du premier, respectivement deuxième, utilisateur.

L'invention se prête à la mise en oeuvre d'interfaces multi-personnelles dans lesquelles plusieurs utilisateurs sont susceptibles d'accéder en parallèle à des données qui leur sont propres après s'être identifiés / authentifiés, puis de partager tout ou partie des données auxquelles ils accèdent après identification / authentification. Le nombre d'applications Web que le navigateur est susceptible de mettre en oeuvre n'est pas limité, si ce n'est par les capacités d'affichage et/ou de traitement du navigateur: l'invention s'applique donc à un partage de données personnelles entre deux utilisateurs ou plus.

Selon un autre mode de réalisation du procédé selon l'invention, le deuxième module logiciel consulte la base de données pour y détecter la présence de données enregistrées par le premier module logiciel, à lire par le deuxième module logiciel.

Selon un autre mode de réalisation, le procédé selon l'invention comprend en outre une étape de lecture par le premier module logiciel de données écrites dans ladite base de données par le deuxième module logiciel.

Selon un autre mode de réalisation du procédé selon l'invention, le premier module logiciel consulte la base de données pour y détecter la présence de données enregistrées par le deuxième module logiciel, à lire par le premier module logiciel.

Les deux applications Web communique entre elles à travers la base de données, y compris pour la synchronisation des accès à la base de données.

Les différents modes de réalisation mentionnés ci-dessus sont combinables entre eux pour la mise en oeuvre de l'invention. La description détaillée illustre un exemple de réalisation où ces caractéristiques sont combinées.

L'invention concerne également un dispositif de navigation pour la mise en oeuvre d'une première application Web associée à un premier domaine de navigation et d'une deuxième application Web associée à un deuxième domaine de navigation, différent du premier domaine de navigation, le dispositif de navigation accédant à une base de données, locale, propre au navigateur, conçue pour enregistrer des données fournies par un module logiciel chargé dans ledit navigateur et pour interdire l'accès aux données enregistrées pour un module logiciel associé à un domaine de navigation à tout module logiciel chargé dans le navigateur qui n'est pas associé audit domaine de navigation,
le dispositif de navigation comprenant:
- des moyens de chargement et d'affichage concomitant d'au moins deux sous-pages d'une page Web initiale, une première sous-page étant utilisée pour afficher une interface utilisateur de la première application Web, une deuxième sous-page étant utilisée pour afficher une interface utilisateur de la deuxième application Web s'exécutant indépendamment de la première application Web,
- des moyens d'exécution d'un premier module logiciel de la première application Web, conçu pour stocker des données dans ladite base de données locale;
- des moyens d'exécution d'un deuxième module logiciel de la deuxième application Web, conçu pour lire des données écrites dans ladite base de données locale par le premier module logiciel,
les premier et deuxième modules logiciels étant associés à un troisième domaine de navigation.

Les avantages énoncés pour le procédé selon l'invention sont transposable directement au dispositif selon l'invention.

Dans un mode de réalisation, les différentes étapes du procédé selon l'invention sont mises en oeuvre par des instructions de programmes qui sont exécutées par un dispositif de navigation, conçu pour une navigation Web via un réseau local privé (réseau Intranet) ou réseau étendu public (typiquement réseau Internet).

En conséquence, l'invention vise aussi un programme d'ordinateur sur un support d'informations, ce programme étant susceptible d'être exécuté par un processeur de données et être mis en oeuvre dans un terminal ou plus généralement dans un ordinateur, ces programmes comportant respectivement des instructions pour la mise en oeuvre des étapes du procédé qui vient d'être décrit.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus. Le support d'informations peut être n'importe quelle entité ou dispositif physique capable de stocker un tel programme.

D'autres aspects, buts et avantages de l'invention apparaîtront à la lecture de la description d'un de ses modes de réalisation.

L'invention sera également mieux comprise à l'aide des dessins, sur lesquels :
- la figure 1 est un schéma de principe d'un terminal selon l'invention;
- la figure 2 représente de manière schématique un navigateur dans un mode de réalisation de l'invention;
- la figure 3 est un organigramme d'un mode de réalisation d'un procédé de communication selon l'invention,
- les figures 4A à 4I illustrent certaines des étapes du procédé selon l'invention;
- les figures 5A à 5B sont des exemples d'interfaces utilisateur utilisables pour la mise en oeuvre de l'invention.

### Terminal 1

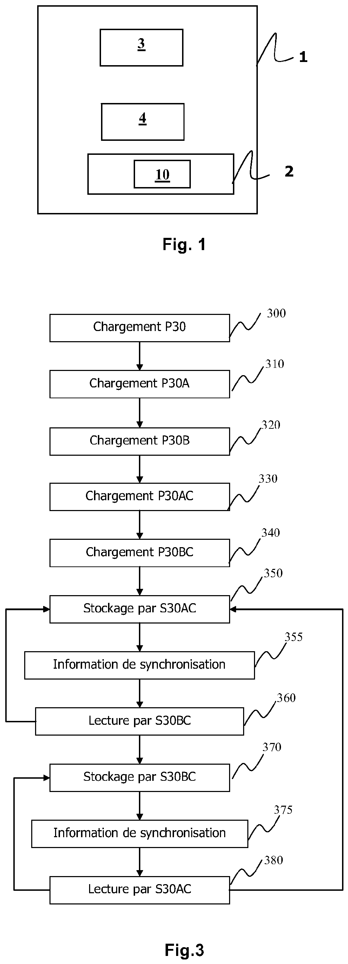

Dans la présente description, et comme illustré sur la figure 1, on considère un terminal 1 comportant une unité de traitement 2 et une interface utilisateur 3. Le terminal 1 comporte une unité d'accès à un réseau 4. L'unité de traitement 2 comporte des moyens de calcul et de mémorisation pour mettre en oeuvre un environnement logiciel 10. L'environnement logiciel 10 est typiquement composé d'un micrologiciel autonome ou « firmware » en anglais, d'un gestionnaire de démarrage ou « boot loader » en anglais, d'un système d'exploitation comprenant des composants logiciels. A titre d'exemple non limitatif, le système d'exploitation peut être un système d'exploitation pour terminal mobile. L'interface utilisateur 3 permet à l'utilisateur d'interagir avec le terminal 1. L'unité d'accès à un réseau 4 permet par exemple au terminal 1 d'accéder à Internet via différents réseaux de communications, comme par exemple un réseau de téléphonie mobile, un réseau informatique, ou un réseau satellitaire. Le terminal 1 est par exemple un équipement mobile portable comme un téléphone mobile ou bien un ordinateur personnel fixe ou mobile.

### Navigateur 20

L'environnement logiciel 10 est adapté pour exécuter un navigateur 20 pour la navigation Web sur un réseau de type Internet ou Intranet. Le navigateur 20 a notamment pour fonction de permettre à un utilisateur d'accéder à un ensemble de pages Web définies pour une application et d'interagir avec cette application au moyen des pages Web affichées dans le navigateur 20.

Plus précisément, le navigateur 20 permet de télécharger des pages Web mettant en oeuvre une application web, ces pages appartenant à un domaine de navigation et étant fournies par un serveur de gestion du domaine de navigation en question. Le navigateur 20 comporte dans ce but au moins un client logiciel apte à émettre une requête conforme au protocole HTTP (« HyperText Transfer Protocol ») à destination d'un serveur distant et recevoir en retour la page Web correspondante.

De manière connue, les pages Web sont décrites par exemple en langage hypertexte de balisage ou en anglais « Hypertext Markup Language » (HTML). Des données de formatage de page, nommées feuilles de style, usuellement codées au format CSS (Cascading Style Sheet), sont jointes à cette page codée en HTML. La page Web contient en outre ou est transmise avec un code de programme (script), codé par exemple en langage Javascript, destiné à être interprété et exécuté par le navigateur lors du chargement de la page Web. Par la suite, on utilisera également pour ce code de programme, associé à une page Web et mettant en oeuvre une application Web, la dénomination de "module logiciel".

Le navigateur 20 comporte ainsi un moteur d'exécution pour interpréter le code HTML d'une page Web et les codes de programme associés, afin d'exécuter les fonctions définies par ces codes de programme, puis de générer une page Web affichable dans le navigateur, mise en forme conformément aux données de formatage associées, et enfin afficher la page résultante dans une interface utilisateur du navigateur.

La notion de domaine de navigation est à interpréter au sens large: il s'agit d'un domaine Web ou pages ayant un même nom de domaine. Par exemple, toutes les pages dont l'URL contient www.xxxx.com et/ou bbb.xxxx.com, où "xxxx.com" représente le nom du domaine en question.

### Base de données 40

La base de données locale 40 est propre au navigateur 20. Elle est adaptée pour stocker de manière persistante des données, au sein du terminal. En particulier, la base de données locale 40 implémente une interface conforme à la spécification du W3C intitulée « Web Storage », notamment dans sa version « Editor's Draft » du 14 April 2010.

Cette base de données est locale en ce que toutes les données qu'elle contient sont stockées localement sur le terminal 1, et l'accès à ces données ne nécessitent donc pas de requête vers un équipement physique distinct du terminal 1.

La base de données locale 40 est configurée pour :
- permettre à tout module logiciel chargé dans le navigateur 20 d'enregistrer des données;
- autoriser l'accès aux données enregistrées par un ou plusieurs modules associés à un domaine de navigation, uniquement à un module chargé dans le navigateur associé également audit même domaine de navigation.

Cette base de données locale est donc conçue pour enregistrer des données fournies par un module logiciel chargé dans le navigateur et pour interdire l'accès aux données enregistrées par un module logiciel associé à un domaine de navigation à tout module logiciel chargé dans le navigateur qui n'est pas associé à ce même domaine de navigation. Cette base de données réalise ainsi un cloisonnement entre les données gérées pour les applications Web d'un domaine de navigation et celles gérées pour les applications Web d'un autre domaine de navigation.

Ainsi une donnée stockée localement correspond, par la suite, à une donnée accessible directement par le navigateur 20, sans faire appel ni à une entité distante hors de l'environnement logiciel 10 comme un serveur web distant, ni à une entité exécutée dans l'environnement logiciel 10 mais supportée par des processus non initiés par le navigateur 20, comme un serveur de base de données exécuté dans l'environnement logiciel dans un processus n'appartenant pas au navigateur 20.

Dans la suite de la description, les références au langage HTML se rapporte au langage HTML5, spécifié au moins en partie dans le document « HTML5 - A vocabulary and associated APIs for HTML and XHTML », W3C Working Draft, 4 March 2010 et aux versions ultérieures de ce langage.

Ce document définit notamment la notion de "contexte de navigation" (browsing context) comme étant un environnement dans lequel un document est présenté à l'utilisateur. Par exemple, chaque fenêtre ou chaque onglet d'un navigateur présente à l'utilisateur un contexte de navigation et sert à présenter une succession de documents ou pages Web à cet utilisateur.

### Affichage des sous-pages Web

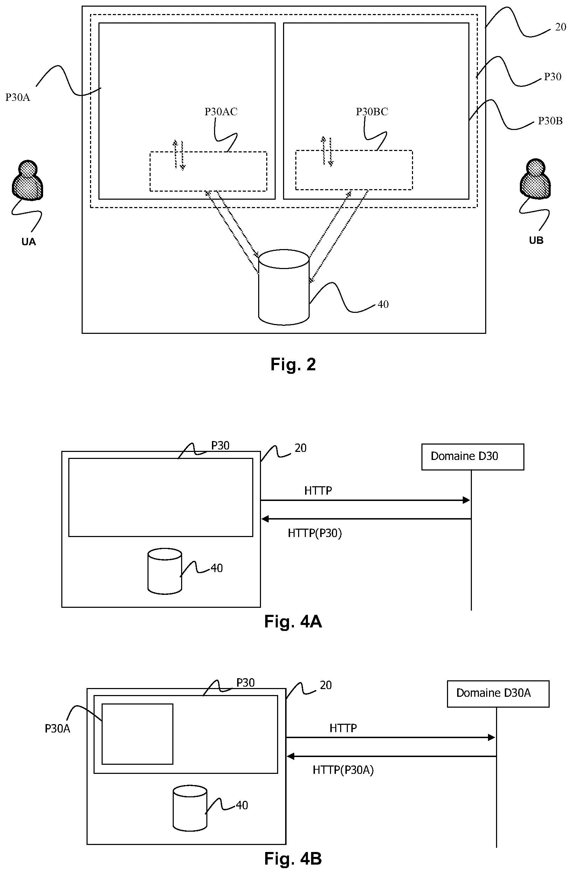

La figure 2 représente de manière schématique la constitution d'une interface utilisateur présentée par le navigateur 20 lors de la mise en oeuvre du procédé selon l'invention. Comme illustré sur la figure 2, le navigateur 20 télécharge une page Web initiale P30 et affiche cette page initiale dans une fenêtre F30 d'une interface utilisateur du navigateur, cette fenêtre présentant deux contextes de navigation:
- un premier contexte de navigation, correspondant à une première sous-fenêtre F30A de la fenêtre F30, comprenant une première sous-page Web P30A avec laquelle un utilisateur du terminal 1 est susceptible d'interagir;
- un deuxième contexte de navigation, correspondant à une deuxième sous-fenêtre F30B de la fenêtre F30, comprenant une deuxième sous-page Web P30B avec laquelle un utilisateur du terminal 1 est susceptible d'interagir;
ces deux sous-fenêtres F30A et F30B et leur contenu respectif étant affichés simultanément par le navigateur 20.

Dans le premier contexte de navigation, s'exécute une première application Web App30A, associée à un premier domaine de navigation D30A, dont l'interface utilisateur est affichée dans la première sous-fenêtre F30A. De même, dans le deuxième contexte de navigation, s'exécute une deuxième application Web App30B, associée à un deuxième domaine de navigation D30B, dont l'interface utilisateur est affichée dans la deuxième sous-fenêtre F30B. Le deuxième domaine de navigation D30B est identique ou distinct du premier domaine de navigation D30A.

La première application Web App30A est mise en oeuvre au moyen d'un module logiciel S30A (Javascript, par exemple), chargé avec la sous-page P30A associée au premier domaine de navigation. De même, la deuxième application Web App30A est mise en oeuvre au moyen d'un module logiciel S30B (Javascript, par exemple), chargé avec la sous-page P30B associée au deuxième domaine de navigation.

Un utilisateur du terminal 1 peut interagir sur la sous-page P30A associée à la première application App30A et induire des modifications de la sous-fenêtre F30A: modification de l'apparence et/ou du contenu de la sous-page P30A ou chargement d'une autre sous-page dans cette même sous-fenêtre F30A. Ce même utilisateur ou un autre utilisateur du terminal 1 peut interagir sur la sous-page P30B associée à la deuxième application App30B et induire des modifications de la sous-fenêtre F30B: modification de l'apparence et/ou du contenu de la sous-page P30B ou chargement d'une autre sous-page dans cette même sous-fenêtre F30B.

La gestion de ces deux contextes de navigation s'effectue en insérant, pour chaque contexte de navigation, dans le code HTML de la page Web initiale, une balise HTML, de type "iframe", telle que définit dans le standard HTML5, contenant au moins une identification d'une page Web (attribut « src » dans le standard HTML5), sous forme par exemple d'URL, pointant vers le domaine de navigation associé à ce contexte de navigation (vers le premier domaine de navigation D30A pour le premier contexte de navigation, vers le deuxième domaine de navigation D30B pour le deuxième contexte de navigation).

Une telle référence sert à instancier un sous-contexte de navigation: sa présence dans le code HTML d'une page Web provoque l'émission, par le navigateur 20, d'une requête HTTP (figure 4B) vers le serveur de gestion du domaine de navigation identifié par cette référence et le chargement par le navigateur 20 d'une page Web appartenant à ce domaine, en l'occurrence la page identifiée par l'URL définie par cette référence. L

Une telle référence est codée en XML par exemple sous la forme suivante:
<iframe src = « www.a.fr /page1»></iframe>
où :
« www.a.fr » identifie le domaine de navigation associé à la référence,
« www.a.fr/page1 » étant l'URL de la page Web à télécharger.

Une telle référence sert ainsi à incorporer par référence une sous-page web dans une autre page Web.

Les données de la sous-page Web P30A ou P30B qui sont chargées par le navigateur 20 en réponse à la requête HTTP comprennent du code HTML, des données de formatage (CSS) et un module logiciel (un code de programme ou script, codé par exemple en Javascript). Pour la première sous-page P30A, on note S30A le module logiciel téléchargé avec le code HTML de la sous-page P30A, servant à la mise en oeuvre de la première application Web App30A. De même, pour la deuxième sous-page P30B, on note S30B le module logiciel et téléchargé avec le code HTML de la sous-page P30B, servant à la mise en oeuvre de la deuxième application Web App30B. Chacun de ces modules logiciels S30A et S30B est chargé en mémoire, interprété et exécuté par le navigateur 20 et les sous-pages P30A et 030B sont affichées dans l'interface utilisateur du navigateur selon ce qui est représenté à la figure 2.

### Communication entre les applications Web App30A et App30B

La première application Web App30A est capable de communiquer avec la deuxième application Web App30B en ce que la première application Web est mise en oeuvre au moyen d'un module logiciel S30AC qui est associé au même domaine de navigation (en l'occurrence un troisième domaine de navigation D30C) qu'un module logiciel S30BC mettant en oeuvre la deuxième application Web: la présence d'un domaine de navigation commun à ces deux modules logiciels S30A, S30B permet à ces deux modules de partager des données stockées par l'un quelconque de ces deux modules dans la base de données locale.

Chacun de ces deux modules logiciels S30AC, S30BC peut donc accéder aux données enregistrées par l'autre dans cette base de données locale et extraire une partie ou l'intégralité de ces données.

Dans ce but, les données enregistrées dans la base de données par l'un quelconque de ces deux modules, comprennent, pour chaque information / paramètre à partager, une identification de l'information considérée et des données représentant cette information ou ce paramètre. Par exemple, si les deux modules logiciels doivent partager une information qui est un numéro de téléphone, une identification de cette information sera mémorisée (par exemple "PhoneNumber") en association avec un numéro de téléphone (par exemple "0123456789")En pratique, chaque module logiciel qui accède à la base de données est libre de créer les tables de stockage souhaitées: en indiquant pour chaque table de stockage une liste d'au moins un champ de données, défini chacun par un nom et un type de données (nombre, texte, etc...) et qui permet le stockage de données de ce type.

Il est envisageable que les deux modules logiciels S30AC, S30BC partagent tout type de contenu, par exemple des images, vidéos ou contenus audio ou plus généralement des données. Il est envisageable également que les données partagées soient du code de programme interprétable et/ou exécutable par le navigateur.

Ces deux modules logiciels S30AC, S30BC sont utilisés de la manière suivante. Pour chaque sous-page Web P30A, P30B est défini un sous-contexte de navigation, par insertion dans le code HTML de cette sous-page Web P30A, P30B, d'une référence au troisième domaine de navigation D30C, sous forme cette fois encore de balise XML de type "iframe", contenant au moins une identification d'une page Web (attribut « src » dans le standard HTML5), sous forme par exemple d'URL, pointant vers le troisième domaine de navigation D30C et identifiant une sous-page P30AC (respectivement P30BC) de la sous-page P30A (respectivement P30B) à télécharger.

Il est à noter que la sous-page P30AC ou P30BC ne comporte pas nécessairement d'informations à présenter à l'utilisateur, et peut donc ne pas induire de modification de la sous-page P30A ou P30B à laquelle elle est rattachée. Dans ce cas en effet, la présentation à l'utilisateur du navigateur de la sous-page P30A ou P30B n'est pas modifiée par la présence de la référence "iframe" et donc invisible pour cet utilisateur. A l'inverse, il pourrait être prévu que la présentation de la sous-page P30A ou P30B soit modifiée, par exemple par ajout d'un logo ou autre signe, indicateur de la possibilité de transmettre des données contenues dans cette sous-page P30A ou P30B vers une autre page Web.

Selon une première alternative de réalisation, la sous-page P30A (respectivement P30B), telle que téléchargée par le navigateur, contient la référence ("iframe") au troisième domaine de navigation D30C et à la sous-page P30AC (respectivement P30BC).

Selon une deuxième alternative de réalisation, le module logiciel S30A insère dynamiquement, lors de son exécution par le navigateur 20, dans la sous-page P30A (respectivement P30B) la référence ("iframe") au troisième domaine de navigation D30C et à la sous-page P30AC (respectivement P30BC). Suite à cette insertion, la sous-page P30A (respectivement P30B) contient donc cette référence, ce qui provoque le chargement, par le navigateur 20 de la sous-page P30AC (respectivement P30BC).

L'échange de données entre les applications logicielles App30A et App30B (entre la sous-page P30A et la sous-page P30B) peut être monodirectionnel (de App30A vers App30B, ou l'inverse) ou bidirectionnel.

Pour le transfert de données de l'application logicielle App30A vers l'application logicielle App30B, la sous-page P30A comporte un ensemble de données DC à sauvegarder localement dans la base de données locale et à transmettre à la sous-page P30B par l'intermédiaire de cette base de données locale. Inversement, pour le transfert de données de l'application logicielle App30B vers l'application logicielle App30A, la sous-page P30B comporte, telle qu'affichée dans l'interface utilisateur du navigateur, un ensemble de données DC à sauvegarder localement dans la base de données locale et à transmettre à la sous-page P30A par l'intermédiaire de cette base de données locale.

Les données transférées peuvent être des données intégrées dans la page HTML telle que reçue par le navigateur et/ou des données ayant été saisies dans cette première page par un utilisateur. Il peut s'agir également de données non visibles par l'utilisateur du navigateur, qui sont en mémoire du navigateur ou codée dans la page HTML, sans être affichées dans l'interface du navigateur.

Les données enregistrées dans la base de données 40 sont enregistrées par exemple sous forme de message à lire par une application. Un message sert ici à définir un ensemble de données liées entre elles, à lire par une application.

### Synchronisation des opérations de lecture et stockage

L'exécution de chacune de ces deux applications est indépendante de l'autre, en ce qu'il s'agit de deux processus distincts. Comme décrit ci-dessous, ces deux processus peuvent toutefois communiquer entre elles: le seul lien entre ces deux applications est établi à travers la base de données locale qui leur sert de zone de stockage partagée.

En conséquence, l'une peut être utilisée pour l'accès à un site Web différent du site Web auquel l'autre application Web permet l'accès. Ces applications Web peuvent aussi être utilisées par deux utilisateurs ayant des comptes utilisateur distincts pour l'accès à un même site Web ou de sites Web distincts.

Différents modes de synchronisation entre ces applications Web peuvent être mis en oeuvre, pour l'accès à cette zone de stockage partagée.

Dans un mode de réalisation, chaque application Web (App30A ou App30B) ayant stocké, dans la base de données 40, des données à lire par une autre application Web, enregistre dans la base de données 40 une information de synchronisation pour signaler à l'autre application Web la présence de données à lire, nouvellement stockées dans cette base de données. Cette autre application logicielle est conçue pour consulter, par exemple périodiquement, la base de données locale 40 pour y détecter la présence d'une telle information de synchronisation signalant la présence de données enregistrées à lire, et en cas de détection, effectuer la lecture de ces données.

En outre, chaque application Web (App30A ou App30B) ayant lu dans la base de données 40 des données ayant été enregistrées par une autre application Web, enregistre dans la base de données une information de synchronisation pour signaler à l'autre application Web que l'opération de lecture a été effectuée: ceci permet d'éviter que l'application Web ayant stocké ces données ne supprime ou remplace ces données avant que l'autre n'ait eu le temps de les lire.

### Mode multi-utilisateur mono-site

Dans un premier mode de réalisation, dit mode multi-utilisateur mono-site, la première sous-page P30A est destinée à être utilisée par un premier utilisateur UA et la deuxième sous-page P30B est destinée à être utilisée par un deuxième utilisateur UB, distinct du premier utilisateur. Les premier et deuxième domaines de navigation D30A et D30B sont supposés être identiques, ainsi que les applications WebApp App30A et App30B, c'est-à-dire qu'elles proposent les mêmes fonctionnalités et mettent en oeuvre un même service via un même site Web faisant partie du domaine de navigation commun D30A (identique à D30B).

Un exemple d'application de ce mode de réalisation est l'échange de données entre deux utilisateurs UA et UB d'un même réseau social: chacun des utilisateurs se connecte sur le site Web du réseau social pour accéder à son compte utilisateur et sélectionner les informations à partager avec l'autre utilisateur. Ce mode de réalisation s'applique plus généralement au partage de données personnelles entre deux utilisateurs ou plus.

Dans ce premier mode de réalisation, pour garantir que les deux utilisateurs UA et UB sont bien distincts, la première sous-page P30A comprend une interface utilisateur pour une saisie de données d'identification et/ou d'authentification du premier utilisateur UA et la deuxième sous-page P30B comprend une interface utilisateur pour une saisie de données d'identification et/ou d'authentification du deuxième utilisateur UB.

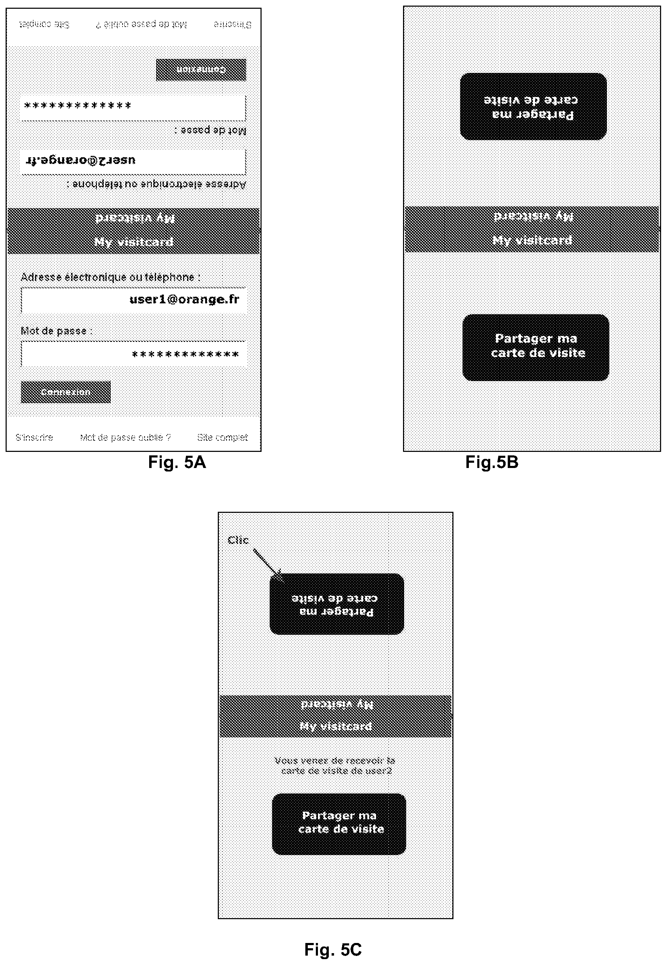

Un exemple d'une telle interface utilisateur est représenté à la figure 5A: une sous-page P30A, à laquelle on a fait subir une rotation de 180°, est affichée tête-bêche, en vis-à-vis d'une page P30B. Chaque sous-page contient un formulaire de saisie de données d'authentification.

Les données d'identification et/ou d'authentification saisies dans la sous-page P30A par le premier utilisateur UA ainsi que celles saisies dans la sous-page P30B par le deuxième utilisateur UA sont transmises à un serveur d'identification / d'authentification contrôlant l'accès au domaine de navigation D30A (identique au domaine D30B) avant d'autoriser ces utilisateurs à utiliser l'application Web App30A ou App30B de la sous-page P30A ou P30B concernée.

Si l'utilisateur UA bénéficie des autorisations nécessaires, la sous-page P30A affichée suite à l'autorisation de connexion au site Web visé, peut faire apparaître des informations propres à l'utilisateur UA (son nom, prénom, identifiant etc) pour signifier à cet utilisateur qu'il est identifié et qu'il accède via l'application Web App30A à un compte utilisateur qui lui est propre. De même, si l'utilisateur UB bénéficie des autorisations nécessaires, la sous-page P30B affichée suite à l'autorisation de connexion au site Web visé, peut faire apparaître des informations propres à l'utilisateur UB (son nom, prénom, identifiant etc) pour signifier à cet utilisateur qu'il est identifié et qu'il accède via l'application Web Bpp30B à un compte utilisateur qui lui est propre.

Dans le cas d'exemple décrit, après autorisation d'accès, les sous-pages P30A et P30B ont l'apparence représentée à la figure 5B: chaque utilisateur accès à une application Web App30A ou App30B de partage de carte de visite et peut cliquer sur l'élément d'interface, sous forme de bouton cliquable, nommé "partager ma carte de visite". Si l'utilisateur UA, clique sur le bouton de la sous-page P30A, les sous-pages P30A et P30B ont l'apparence représentée à la figure 5C: un message d'information apparaît dans la sous-page P30B ("vous venez de recevoir la carte de visite de user2") pour signaler la bonne exécution d'un transfert de données.

### Mode multi-utilisateur multi-domaine

Dans un deuxième mode de réalisation, dit mode multi-utilisateur multi-domaine, la première sous-page P30A est destinée à être utilisée par un premier utilisateur UA et la deuxième sous-page P30B est destinée à être utilisée par un deuxième utilisateur UB, distinct du premier utilisateur, les premier et deuxième domaines de navigation D30A et D30B étant également distincts. Tout comme dans le premier mode de réalisation, la première sous-page P30A comprend une interface utilisateur pour une saisie de données d'identification et/ou d'authentification du premier utilisateur UA et la deuxième sous-page P30B comprend une interface utilisateur pour une saisie de données d'identification et/ou d'authentification du deuxième utilisateur UB.

Les données d'identification et/ou d'authentification saisies dans la sous-page P30A par le premier utilisateur UA ainsi que celles saisies dans la sous-page P30B par le deuxième utilisateur UA sont transmises à un serveur d'identification / d'authentification contrôlant l'accès au domaine de navigation D30A ou bien D30B avant d'autoriser ces utilisateurs à utiliser l'application Web App30A ou App30B de la sous-page P30A ou P30B concernée. Le reste du fonctionnement est identique à celui décrit pour le mode multi-utilisateur mono-site.

Un exemple d'application de ce mode de réalisation de l'invention est l'échange de données entre deux utilisateurs UA et UB de deux réseaux sociaux différents: chacun des utilisateurs se connecte sur le site Web du réseau social auquel il appartient pour accéder à son compte utilisateur et sélectionner les informations à partager avec l'autre utilisateur.

Ce mode de réalisation est applicable au partage d'information entre plus de deux applications Web / sites Web distincts: il suffit pour cela d'initier une application Web par site et d'insérer dans une sous-page Web, servant d'interface utilisateur pour une application Web, une référence à un domaine de navigation commun à toutes les applications Web concernées par le partage d'information.

### Mode mono-utilisateur multi-domaine

Dans un troisième mode de réalisation, dit mode mono-utilisateur multi-domaine, la première sous-page P30A est destinée à être utilisée par un premier utilisateur UA et la deuxième sous-page P30B est destinée à être utilisée par le même utilisateur UB (identique à UA), mais les premier et deuxième domaines de navigation D30A et D30B sont distincts, si bien que cet utilisateur doit s'identifier / s'authentifier à la fois auprès d'un premier serveur d'identification / d'authentification contrôlant l'accès au premier domaine de navigation D30A et à la fois auprès d'un deuxième serveur d'identification / d'authentification contrôlant l'accès au deuxième domaine de navigation D30B.

Dans ce troisième mode de réalisation, la première sous-page P30A, tout comme la deuxième sous-page P30B, comprend une interface utilisateur pour une saisie de données d'identification et/ou d'authentification de l'utilisateur UA (= UB). Les données d'identification et/ou d'authentification saisies dans la première sous-page P30A ou P30B sont transmises à un serveur d'identification / d'authentification avant d'autoriser l'utilisateur à utiliser l'application Web App30A ou App30B de la sous-page P30A ou P30B concernée.

Si l'utilisateur UA bénéficie des autorisations nécessaires, la sous-page P30A affichée suite à l'autorisation de connexion au site Web visé, peut faire apparaître des informations propres à l'utilisateur UA (son nom, prénom, identifiant etc) pour signifier à cet utilisateur qu'il est identifié et qu'il accède via l'application Web App30A à un compte utilisateur qui lui est propre. De même, si l'utilisateur UB bénéficie des autorisations nécessaires, la sous-page P30B affichée suite à l'autorisation de connexion au site Web visé, peut faire apparaître des informations propres à l'utilisateur UB (son nom, prénom, identifiant etc) pour signifier à cet utilisateur qu'il est identifié et qu'il accède via l'application Web Bpp30B à un compte utilisateur qui lui est propre.

Un exemple d'application de ce mode de réalisation de l'invention est le paiement en ligne, lors duquel un utilisateur se connecte à un premier site Web d'achat en ligne pour sélectionner les objets qu'il souhaite acheter / commander puis se connecte à un deuxième site Web d'une banque en ligne pour obtenir des données de paiement, sous forme par exemple de numéro de carte virtuelle de paiement. Le montant de la facture à acquitter est transféré de la première application App30A à la deuxième application App30B. Cette dernière effectuant la demande de génération de carte virtuelle de paiement pour le montant indiqué et transférant les données de paiement à la première application App30A pour finaliser l'achat.

### Mode mono-utilisateur mono-domaine

Dans un quatrième mode de réalisation, dit mode mono-utilisateur mono-domaine, la première sous-page P30A est destinée à être utilisée par un premier utilisateur UAB et la deuxième sous-page P30B est destinée à être utilisée par le même utilisateur UAB, et les premier et deuxième domaines de navigation D30A et D30B sont également identiques.

Mais les premières et deuxième applications s'exécutant indépendamment l'une de l'autre, cet utilisateur doit s'identifier / s'authentifier à la fois auprès d'un premier serveur d'identification / d'authentification contrôlant l'accès au premier domaine de navigation D30A et à la fois auprès d'un deuxième serveur d'identification / d'authentification contrôlant l'accès au deuxième domaine de navigation D30B.

Il est toutefois envisageable que l'utilisateur saisisse une seule fois, dans une des deux sous-pages P30A ou P30B initialement chargée, ses données d'identification et/ou d'authentification et que ces données d'identification et/ou d'authentification soit transférées à l'autre sous-page par l'intermédiaire de la base de données locale 40, conformément au procédé selon l'invention.

Ces quatre modes de réalisation permettent d'effectuer un copier / coller automatisé fonctionnant sur plusieurs champs de données. Ils permettent en outre des transferts de page à page de données complexes telles que images, vidéo, contenu audio, etc, sous réserve de ne pas dépasser la capacité de stockage de la base de données (10Moctets en moyenne).?

### Procédé de communication entre deux applications Web

Un mode de réalisation du procédé selon l'invention est décrit par référence à la figure 3 et aux figures 4A à 4I.

Le procédé débute avec une étape 300 d'envoi d'une requête HTTP vers un serveur Web d'un domaine D30, puis de chargement et d'affichage d'une page Web P30 initiale reçue en réponse à cette requête HTTP (figure 4A). Cette page Web initiale P30 est affichée dans une fenêtre F30 d'une interface utilisateur du navigateur 20. Le code HTML de la page P30 chargée comprend une première référence à un premier domaine de navigation D30A et une première sous-page P30A ainsi qu'une deuxième référence à un deuxième domaine de navigation et une deuxième sous-page P30B.

En raison de la présence de la première référence dans la page P30, le procédé se poursuit avec une étape 310 d'envoi d'une requête HTTP vers un serveur Web d'un premier domaine de navigation D30A et de réception en réponse d'une première sous-page P30A et d'un module logiciel S30A associé, sous forme de script (figure 4B). Cette première sous-page P30A est décodée, interprétée et affichée dans l'interface utilisateur du navigateur 20, dans une sous-fenêtre F30A de la fenêtre F30. Le module logiciel S30A est chargé en mémoire du navigateur, interprété puis exécuté par le navigateur 20.

Cette première sous-page est utilisée pour afficher une interface utilisateur d'une première application Web App30A du premier domaine de navigation D30A. Le code HTML de cette première sous-page P30A telle que reçue par le navigateur 20 comprend une troisième référence à un troisième domaine de navigation D30C et à une sous-page P30AC. En alternative, comme décrit ci-dessus, cette troisième référence est insérée dynamiquement dans le code HTML de la sous-page P30A par le module logiciel S30A chargé avec cette même sous-page P30A.

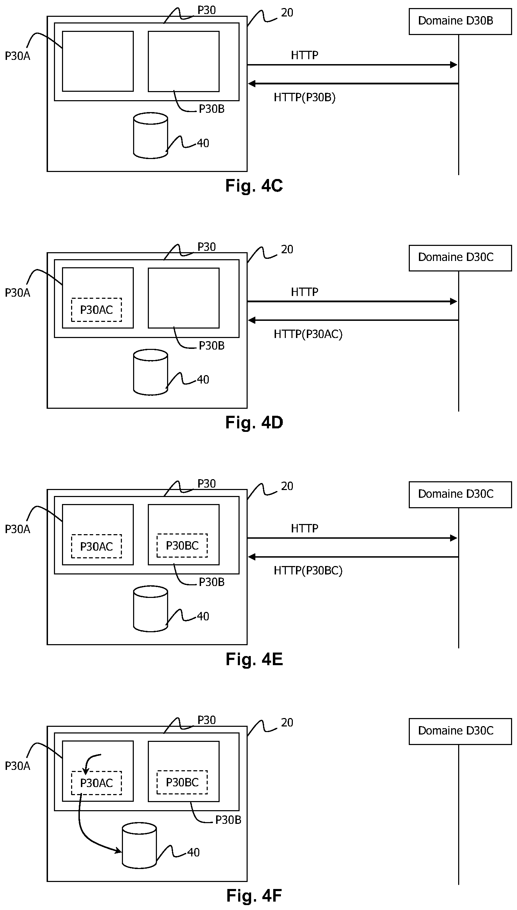

En raison de la présence de la deuxième référence dans la page P30, le procédé se poursuit avec une étape 320 d'envoi d'une requête HTTP vers un serveur Web d'un deuxième domaine de navigation D30B (identique ou distinct du premier domaine de navigation) et de réception en réponse d'une deuxième sous-page P30B et un module logiciel S30B associé, sous forme de script (figure 4C). Cette deuxième sous-page P30B est décodée, interprétée et affichée dans l'interface utilisateur du navigateur 20, dans une sous-fenêtre F30B de la fenêtre F30. Le module logiciel S30B est chargé en mémoire du navigateur, interprété puis exécuté par le navigateur 20.

Cette deuxième sous-page est utilisée pour afficher une interface utilisateur d'une deuxième application Web App30B du deuxième domaine de navigation D30B. Le code HTML de cette deuxième sous-page P30B telle que reçue par le navigateur 20 comprend une quatrième référence au troisième domaine de navigation D30C et à une sous-page P30BC. En alternative, comme décrit ci-dessus, cette quatrième référence est insérée dynamiquement dans le code HTML de la sous-page P30B par le module logiciel S30B chargé avec cette même sous-page P30B.

En raison de la présence de la troisième référence, le procédé se poursuit avec une étape 330 d'envoi d'une requête HTTP vers un serveur Web du troisième domaine de navigation D30C et de réception en réponse d'une sous-page P30AC et d'un module logiciel S30AC associé, sous forme de script (figure 4D).

Cette sous-page P30AC est décodée, interprétée et éventuellement affichée. En particulier, l'apparence de la sous-page P30A au sein de la fenêtre F30A de l'interface utilisateur du navigateur 20 peut être modifiée, par exemple par ajout de logo ou d'un ou plusieurs éléments d'interaction supplémentaires, permettant à l'utilisateur de déclencher une fonction de transfert de données vers la deuxième application Web App30B et/ou de lecture de données provenant de la deuxième application Web App30B. On suppose ici que la sous-page P30A comprend, initialement ou suite aux modifications apportées par la sous-page P30AC, au moins un tel élément d'interaction.

Le module logiciel S30AC reçu avec la sous-page P30AC est également chargé, interprété et exécuté par le navigateur 20. Ce module logiciel S30AC est utilisé, tout comme le module logiciel S30A, pour mettre en oeuvre la première application Web App30A. Les modules logiciels S30A et S30AC peuvent notamment communiquer entre eux, au moyen du protocole HTTP, par exemple lorsque:
- le module logiciel S30A transmet au module logiciel S30AC des données à stocker dans la base de données locale; ou
- le module logiciel S30AC transmet au module logiciel S30A des données lues dans la base de données locale.

En raison de la présence de la quatrième référence, le procédé se poursuit avec une étape 340 d'envoi d'une requête HTTP vers un serveur Web du troisième domaine de navigation D30C et de réception en réponse d'une sous-page P30BC et d'un module logiciel S30BC associé, sous forme de script (figure 4E).

Cette sous-page P30BC est décodée, interprétée et éventuellement affichée. En particulier, l'apparence de la sous-page P30B au sein de la fenêtre F30B de l'interface utilisateur du navigateur 20 peut être modifiée, par exemple par ajout de logo ou d'un ou plusieurs éléments d'interaction supplémentaires, permettant à l'utilisateur de déclencher une fonction de transfert de données vers la deuxième application Web App30A et/ou de lecture de données provenant de la deuxième application Web App30A. On suppose ici que la sous-page P30B comprend, initialement ou suite aux modifications apportées par la sous-page P30BC, au moins un tel élément d'interaction.

Le module logiciel S30BC reçu avec la sous-page P30BC est également chargé, interprété et exécuté par le navigateur 20. Ce module logiciel S30BC est utilisé, tout comme le module logiciel S30B, pour mettre en oeuvre la deuxième application Web App30B. Les modules logiciels S30B et S30BC peuvent notamment communiquer entre eux, au moyen du protocole HTTP, par exemple lorsque:
- le module logiciel S30B transmet au module logiciel S30BC des données à stocker dans la base de données locale; ou
- le module logiciel S30BC transmet au module logiciel S30B des données lues dans la base de données locale.

A ce stade, un utilisateur peut interagir avec la première sous-page P30A, en particulier pour prendre connaissance des informations présentées, saisir de nouvelles données, par exemple à l'aide de formulaires, ou demander l'exécution de certaines tâches à la première application Web App30A. Dans un mode de réalisation particulier, un utilisateur UA se connecte lors d'une étape 345 (non représentée, optionnelle) à un compte utilisateur sur un site du premier domaine de navigation D30A au moyen de cette première application Web App30A.

Un autre utilisateur (ou le même utilisateur) peut interagir de la même manière avec la deuxième sous-page P30B, en particulier pour prendre connaissance des informations présentées, saisir de nouvelles données, par exemple à l'aide de formulaires, ou demander l'exécution de certaines tâches à la première application Web App30B. Dans un mode de réalisation particulier, un utilisateur UB (identique ou distinct de UA) se connecte lors d'une étape 346 (non représentée, optionnelle) à un compte utilisateur sur un site du deuxième domaine de navigation D30B au moyen de cette deuxième application Web App30B.

Suite à une action effectuée par un utilisateur sur la sous-page P30A, par exemple au moyen d'un élément d'interaction précité présent dans la sous-page P30A, le procédé se poursuit avec une étape 350 de stockage, par le module logiciel S30AC de données dans la base de données locale (figure 4F).

Puis le module logiciel S30AC enregistre, dans cette base de données locale, une première information de synchronisation pour signaler au module logiciel S30BC de la présente de données à lire, nouvellement stockées dans cette base de données.

Les données enregistrées par le module logiciel S30AC dans le base de données sont par exemple extraites de données affichées dans la sous-page P30A et/ou extraites de données fournies par le module logiciel S30AC ou le module logiciel S30A ou par le navigateur 20 lui-même.

Le procédé se poursuit avec une étape 355 lors de laquelle le module logiciel S30BC consulte la base de données locale pour y détecter la présence de la première information de synchronisation signalant la présence de données enregistrées par le module logiciel S30AC, à lire par le module logiciel S30BC.

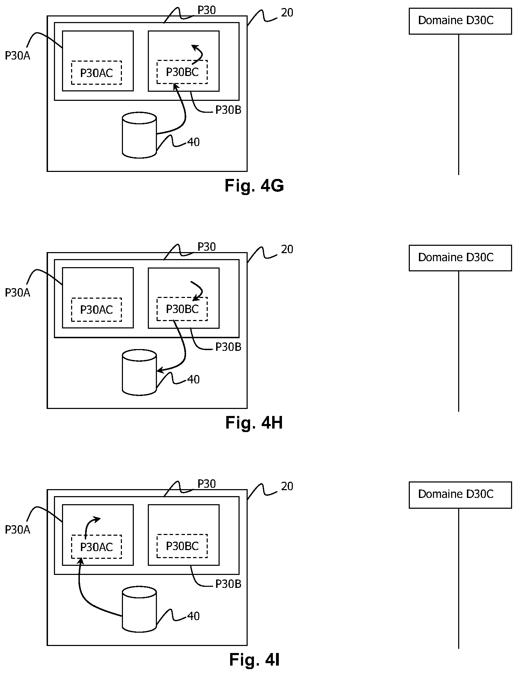

Une telle information de synchronisation étant présente, le procédé se poursuit avec une étape 360 de lecture dans la base de données locale, par le module logiciel S30BC de données stockées à l'étape 350 dans cette base de données par le module logiciel S30AC (figure 4G). Puis le module logiciel S30BC enregistre, dans cette base de données locale, une deuxième information de synchronisation pour signaler au module logiciel S30AC que l'opération de lecture a été effectuée.

Les données lues par le module logiciel S30BC dans la base de données sont par exemple affichées dans la sous-page P30B et/ou transmises pour traitement au module logiciel S30BC ou au module logiciel S30B ou au navigateur 20 lui-même, ce traitement pouvant également induire des modifications de l'affichage de la sous-page P30B.

Suite à une action effectuée par un utilisateur sur la sous-page P30B, par exemple au moyen d'un élément d'interaction précité présent dans la sous-page P30B, le procédé se poursuit avec une étape 370 de stockage, par le module logiciel S30BC de données dans la base de données locale (figure 4H).

Puis, le module logiciel S30BC enregistre dans cette base de données locale une troisième information de synchronisation pour signaler au module logiciel S30AC de la présence de données à lire, nouvellement stockées dans cette base de données.

Les données enregistrées par le module logiciel S30BC dans le base de données sont par exemple extraites de données affichées dans la sous-page P30B et/ou extraites de données fournies par le module logiciel S30BC ou le module logiciel S30B ou par le navigateur 20 lui-même.

Le procédé se poursuit avec une étape 375 lors de laquelle le module logiciel S30AC consulte la base de données locale pour y détecter la présence de la troisième information de synchronisation signalant la présence de données enregistrées par le module logiciel S30BC, à lire par le module logiciel S30AC.

Une telle information de synchronisation étant présente, le procédé se poursuit avec une étape 380 de lecture dans la base de données locale, par le module logiciel S30AC de données écrites à l'étape 350 dans cette base de données par le module logiciel S30BC (figure 4I). Puis, le module logiciel S30AC enregistre également dans cette base de données locale une quatrième information de synchronisation pour signaler au module logiciel S30BC que l'opération de lecture a été effectuée.

Les étapes de stockage et/ou lecture dans la base de données 40 peuvent être répétées plusieurs fois. En particulier, suite à l'étape 360 de lecture, les étapes 350 à 360 peuvent être répétées pour transférer d'autres données de la première application App30A vers la deuxième application App30B. De même, suite à l'étape 380 de lecture, les étapes 370 à 380 peuvent être répétées pour transférer d'autres données de la deuxième application App30B vers la deuxième application App30A. Enfin, suite à l'étape 380 de lecture, les étapes 350 à 380 peuvent être répétées.

Par ailleurs, l'étape 355 ou 375, lors de laquelle le module logiciel S30AC ou S30BC consulte la base de données 40 pour y détecter la présence d'une information de synchronisation indiquant l'existence de données à lire par ce module logiciel, est répétée, de préférence de manière périodique, par le module logiciel S30AC ou S30BC pendant toute son exécution, de manière à ce que celui-ci détecte rapidement l'existence de données à lire.

L'invention se prête à la mise en oeuvre de différentes applications nécessitant une communication entre deux applications Web. Ces applications Web peuvent communiquer grâce à l'invention en passant par une base de données locale, ne nécessitant pas pour son accès d'établir de connexion à travers un réseau et formant un espace de stockage en accès partagé au sein du navigateur.

L'invention simplifie considérablement pour l'utilisateur les transferts d'informations / de données de page à page, que ces pages appartiennent ou non à des sites différents. L'invention est application également au transfert de données entre deux utilisateurs distincts, connectés ou non à un même site et accédant aux données à partager via un compte utilisateur qui leur est propre.

L'invention permet la réalisation d'une sorte de "middleware", c'est-à-dire un bus logiciel de communication entre applications et une fonction de presse-papier automatisée entre deux applications Web.

## Revendications

1. Procédé de communication entre une première application Web associée à un premier domaine de navigation (D30A) et une deuxième application Web associée à un deuxième domaine de navigation (D30B), différent du premier domaine de navigation, comprenant une étape de chargement et d'affichage concomitant d'au moins deux sous-pages (P30A, P30B) d'une page Web (P30) initiale, une première sous-page (P30A) étant utilisée pour afficher une interface utilisateur de la première application Web, une deuxième sous-page (P30B) étant utilisée pour afficher une interface utilisateur de la deuxième application Web s'exécutant indépendamment de la première application Web, le procédé est **caractérisé en ce que** les premières et deuxièmes applications sont mises en oeuvre au sein d'un navigateur (20) accédant à une base de données locale (40) propre au navigateur (20), ladite base de données locale étant conçue pour enregistrer des données fournies par un module logiciel chargé dans ledit navigateur (20) et pour interdire l'accès aux données enregistrées pour un module logiciel associé à un domaine de navigation (D30C) à tout module logiciel chargé dans le navigateur (20) qui n'est pas associé audit domaine de navigation (D30C), et **en ce qu'**il comprend :
- une étape de stockage, par un premier module logiciel (S30AC) de la première application Web, de données dans ladite base de données locale (40);
- une étape de lecture, par un deuxième module logiciel (S30BC) de la deuxième application Web, de données écrites dans ladite base de données locale (40) par le premier module logiciel (S30AC), les premier et deuxième modules logiciels (S30AC, S30BC) étant associés à un troisième domaine de navigation (D30C).

2. Procédé selon la revendication 1 dans lequel le navigateur (20) charge dynamiquement le premier, respectivement deuxième, module logiciel (S30AC) en raison de la présence dans la première, respectivement deuxième, sous-page Web (P30A) d'une première, respectivement deuxième, référence au troisième domaine de navigation (D30C).

3. Procédé selon la revendication 2 dans lequel un module logiciel (S30A) de la première, respectivement deuxième, application insère la première, respectivement deuxième, référence dans la première, respectivement deuxième, sous-page Web (P30A).

4. Procédé selon la revendication 2 dans lequel la première, respectivement deuxième, référence est présente dans la première, respectivement deuxième, sous-page Web (P30A) telle que chargée initialement par le navigateur (20).

5. Procédé selon la revendication 2 dans lequel la première, respectivement deuxième, référence est une référence à une première, respectivement deuxième, page Web (P30AC), contenant le code du premier respectivement deuxième, module logiciel (S30AC), cette première respectivement deuxième, page Web (P30AC) étant destinée à être chargée puis interprétée par le navigateur (20).

6. Procédé selon la revendication 1, dans lequel tout ou partie des données enregistrées par le premier module logiciel (S30AC) dans ladite base de données locale (40) sont extraites de données affichées dans la première sous-page (P30A).

7. Procédé selon la revendication 1, dans lequel tout ou partie des données lues par le deuxième module logiciel (S30BC) dans ladite base de données locale (40) sont affichées dans la deuxième sous-page (P30B).

8. Procédé selon la revendication 1, dans lequel la première sous-page (P30A) est destinée à être utilisée par un premier utilisateur (UA) et la deuxième sous-page (P30B) est destinée à être utilisée par un deuxième utilisateur (UB), distinct du premier utilisateur,
la première, respectivement deuxième, sous-page (P30A) comprenant une interface utilisateur pour une saisie de données d'identification et/ou d'authentification du premier, respectivement deuxième, utilisateur (UA).

9. Procédé selon la revendication 1, dans lequel le deuxième module logiciel (S30BC) consulte la base de données locale (40) pour y détecter la présence de données enregistrées par le premier module logiciel (S30AC), à lire par le deuxième module logiciel (S30BC).

10. Procédé selon la revendication 1, comprenant une étape de lecture par le premier module logiciel (S30AC) de données écrites dans ladite base de données locale (40) par le deuxième module logiciel (S30BC).

11. Procédé selon la revendication 10, dans lequel le premier module logiciel (S30AC) consulte la base de données locale (40) pour y détecter la présence de données enregistrées par le deuxième module logiciel (S30BC), à lire par le premier module logiciel (S30AC).

12. Dispositif de navigation (20) pour la mise en oeuvre d'une première application Web associée à un premier domaine de navigation (D30A) et d'une deuxième application Web associée à un deuxième domaine de navigation (D30B), différent du premier domaine de navigation, le dispositif de navigation (20) accédant à une base de données locale (40) propre au navigateur (20), ladite base de données locale étant conçue pour enregistrer des données fournies par un module logiciel chargé dans ledit navigateur (20) et pour interdire l'accès aux données enregistrées pour un module logiciel associé à un domaine de navigation (D30C) à tout module logiciel chargé dans le navigateur (20) qui n'est pas associé audit domaine de navigation (D30C),
le dispositif de navigation comprenant:
- des moyens de chargement et d'affichage concomitant d'au moins deux sous-pages (P30A, P30B) d'une page Web (P30) initiale, une première sous-page (P30A) étant utilisée pour afficher une interface utilisateur de la première application Web, une deuxième sous-page (P30B) étant utilisée pour afficher une interface utilisateur de la deuxième application Web s'exécutant indépendamment de la première application Web,
- des moyens d'exécution d'un premier module logiciel (S30AC) de la première application Web , conçu pour stocker des données dans ladite base de données locale (40);
- des moyens d'exécution d'un deuxième module logiciel (S30BC) de la deuxième application Web , conçu pour lire des données écrites dans ladite base de données locale (40) par le premier module logiciel (S30AC),
les premier et deuxième modules logiciels (S30AC, S30BC) étant associés à un troisième domaine de navigation (D30C).

13. Programme d'ordinateur sur un support d'informations, comportant des instructions pour la mise en oeuvre des étapes du procédé de communication selon l'une quelconque des revendications 1 à 11 lorsque le programme est exécuté par un processeur de données.

## Patentansprüche

1. Verfahren zur Kommunikation zwischen einer ersten Web-Applikation, die einer ersten Navigationsdomäne (D30A) zugeordnet ist, und einer zweiten Web-Applikation, die einer von der ersten Navigationsdomäne verschiedenen zweiten Navigationsdomäne (D30B) zugeordnet ist, welches einen Schritt des Ladens und des gleichzeitigen Anzeigens von wenigstens zwei Unterseiten (P30A, P30B) einer Ausgangswebseite (P30) umfasst, wobei eine erste Unterseite (P30A) verwendet wird, um eine Benutzerschnittstelle der ersten Web-Applikation anzuzeigen, und eine zweite Unterseite (P30B) verwendet wird, um eine Benutzerschnittstelle der zweiten Web-Applikation anzuzeigen, die unabhängig von der ersten Web-Applikation ausgeführt wird, wobei das Verfahren **dadurch gekennzeichnet ist, dass** die ersten und zweiten Applikationen innerhalb eines Browsers (20) durchgeführt werden, der auf eine eigene lokale Datenbank (40) des Browsers (20) zugreift, wobei diese lokale Datenbank dafür eingerichtet ist, Daten zu registrieren, die von einem in den Browser (20) geladenen Softwaremodul geliefert werden, und den Zugriff auf die Daten, die für ein einer Navigationsdomäne (D30C) zugeordnetes Softwaremodul registriert wurden, für jedes in den Browser (20) geladene Softwaremodul zu sperren, welches nicht der Navigationsdomäne (D30C) zugeordnet ist, und dadurch, dass es umfasst:
- einen Schritt des Speicherns, durch ein erstes Softwaremodul (S30AC) der ersten Web-Applikation, von Daten in der lokalen Datenbank (40);
- einen Schritt des Lesens, durch ein zweites Softwaremodul (S30BC) der zweiten Web-Applikation, von Daten, die durch das erste Softwaremodul (S30AC) in die lokale Datenbank (40) geschrieben wurden,
wobei das erste und das zweite Softwaremodul (S30AC, S30BC) einer dritten Navigationsdomäne (D30C) zugeordnet sind.

2. Verfahren nach Anspruch 1, wobei der Browser (20) dynamisch das erste bzw. zweite Softwaremodul (S30AC) aufgrund des Vorhandenseins eines ersten bzw. zweiten Verweises auf die dritte Navigationsdomäne (D30C) in der ersten bzw. zweiten Unterwebseite (P30A) lädt.

3. Verfahren nach Anspruch 2, wobei ein Softwaremodul (S30A) der ersten bzw. zweiten Applikation den ersten bzw. zweiten Verweis in die erste bzw. zweite Unterwebseite (P30A) einfügt.

4. Verfahren nach Anspruch 2, wobei der erste bzw. zweite Verweis in der ersten bzw. zweiten Unterwebseite (P30A), so wie sie ursprünglich durch den Browser (20) geladen wurde, vorhanden ist.

5. Verfahren nach Anspruch 2, wobei der erste bzw. zweite Verweis ein Verweis auf eine erste bzw. zweite Webseite (P30AC) ist, der den Code des ersten bzw. zweiten Softwaremoduls (S30AC) enthält, wobei diese erste bzw. zweite Webseite (P30AC) dazu bestimmt ist, durch den Browser (20) geladen und danach interpretiert zu werden.

6. Verfahren nach Anspruch 1, wobei sämtliche oder ein Teil der Daten, die von dem ersten Softwaremodul (S30AC) in der lokalen Datenbank (40) registriert werden, aus Daten extrahiert werden, die in der ersten Unterseite (P30A) angezeigt werden.

7. Verfahren nach Anspruch 1, wobei sämtliche oder ein Teil der Daten, die von dem zweiten Softwaremodul (S30BC) in der lokalen Datenbank (40) gelesen werden, in der zweiten Unterseite (P30B) angezeigt werden.

8. Verfahren nach Anspruch 1, wobei die erste Unterseite (P30A) dazu bestimmt ist, von einem ersten Benutzer (UA) verwendet zu werden, und die zweite Unterseite (P30B) dazu bestimmt ist, von einem zweiten Benutzer (UB) verwendet zu werden, der von dem ersten Benutzer verschieden ist,
wobei die erste bzw. zweite Unterseite (P30A) eine Benutzerschnittstelle für eine Erfassung von Identifikations- und/oder Authentifikationsdaten des ersten bzw. zweiten Benutzers (UA) umfasst.

9. Verfahren nach Anspruch 1, wobei das zweite Softwaremodul (S30BC) die lokale Datenbank (40) abfragt, um dort das Vorhandensein von durch das erste Softwaremodul (S30AC) registrierten Daten zu erkennen, die durch das zweite Softwaremodul (S30BC) zu lesen sind.

10. Verfahren nach Anspruch 1, welches einen Schritt des Lesens von Daten, die durch das zweite Softwaremodul (S30BC) in die lokale Datenbank (40) geschrieben wurden, durch das erste Softwaremodul (S30AC) umfasst.

11. Verfahren nach Anspruch 10, wobei das erste Softwaremodul (S30AC) die lokale Datenbank (40) abfragt, um dort das Vorhandensein von durch das zweite Softwaremodul (S30BC) registrierten Daten zu erkennen, die durch das erste Softwaremodul (S30AC) zu lesen sind.

12. Browservorrichtung (20) zur Durchführung einer ersten Web-Applikation, die einer ersten Navigationsdomäne (D30A) zugeordnet ist, und einer zweiten Web-Applikation, die einer von der ersten Navigationsdomäne verschiedenen zweiten Navigationsdomäne (D30B) zugeordnet ist,
wobei die Browservorrichtung (20) auf eine eigene lokale Datenbank (40) des Browsers (20) zugreift,
wobei diese lokale Datenbank dafür eingerichtet ist, Daten zu registrieren, die von einem in den Browser (20) geladenen Softwaremodul geliefert werden, und den Zugriff auf die Daten, die für ein einer Navigationsdomäne (D30C) zugeordnetes Softwaremodul registriert wurden, für jedes in den Browser (20) geladene Softwaremodul zu sperren, welches nicht der Navigationsdomäne (D30C) zugeordnet ist,
wobei die Browservorrichtung (20) umfasst:
- Mittel zum Laden und gleichzeitigen Anzeigen von wenigstens zwei Unterseiten (P30A, P30B) einer Ausgangswebseite (P30), wobei eine erste Unterseite (P30A) verwendet wird, um eine Benutzerschnittstelle der ersten Web-Applikation anzuzeigen, und eine zweite Unterseite (P30B) verwendet wird, um eine Benutzerschnittstelle der zweiten Web-Applikation anzuzeigen, die unabhängig von der ersten Web-Applikation ausgeführt wird,
- Mittel zur Ausführung eines ersten Softwaremoduls (S30AC) der ersten Web-Applikation, das dafür eingerichtet ist, Daten in der lokalen Datenbank (40) zu speichern,
- Mittel zur Ausführung eines zweiten Softwaremoduls (S30BC) der zweiten Web-Applikation, das dafür eingerichtet ist, Daten zu lesen, die durch das erste Softwaremodul (S30AC) in die lokale Datenbank (40) geschrieben wurden, wobei das erste und das zweite Softwaremodul (S30AC, S30BC) einer dritten Navigationsdomäne (D30C) zugeordnet sind.

13. Computerprogramm auf einem Informationsträger, welches Anweisungen zur Durchführung der Schritte des Verfahrens zur Kommunikation nach einem der Ansprüche 1 bis 11, wenn das Programm von einem Datenprozessor ausgeführt wird, umfasst.

## Claims

1. Method for communicating between a first web application associated with a first browsing domain (D30A) and a second web application associated with a second browsing domain (D30B), different from the first browsing domain,
comprising a step for loading and for displaying concurrently at least two sub-pages (P30A, P30B) of an initial web page (P30), a first sub-page (P30A) being used for displaying a user interface of the first web application, a second sub-page (P30B) being used for displaying a user interface of the second web application being executed independently of the first web application, the method being **characterized in that** the first and second applications are implemented within a browser (20) accessing a local database (40) specific to the browser (20), said local database being designed for recording data supplied by a software module loaded into said browser (20) and to prohibit access to the data stored for a software module associated with a browsing domain (D30C) to any software module loaded into the browser (20) which is not associated with said browsing domain (D30C), and **in that** it comprises:
- a step for storing data, by a first software module (S30AC) of the first web application, in said local database (40);
- a step for reading, by a second software module (S30BC) of the second web application, data written in said local database (40) by the first software module (S30AC),
the first and second software modules (S30AC, S30BC) being associated with a third browsing domain (D30C).

2. Method according to Claim 1 in which the browser (20) dynamically loads the first, respectively second, software module (S30AC) owing to the presence in the first, respectively second, web sub-page (P30A) of a first, respectively a second, reference to the third browsing domain (D30C).

3. Method according to Claim 2 in which a software module (S30A) of the first, respectively second, application inserts the first, respectively second, reference into the first, respectively second, web sub-page (P30A).

4. Method according to Claim 2 in which the first, respectively second, reference is present in the first, respectively second, web sub-page (P30A) such as initially loaded by the browser (20).

5. Method according to Claim 2 in which the first, respectively second, reference is a reference to a first respectively second, web page (P30AC), containing the code of the first, respectively second, software module (S30AC), where this first, respectively second, web page (P30AC) will be loaded then interpreted by the browser (20).

6. Method according to Claim 1, in which all or part of the data recorded by the first software module (S30AC) in said database (40) is extracted from data displayed in the first sub-page (P30A).

7. Method according to Claim 1, in which all or part of the data read by the second software module (S30BC) in said local database (40) is displayed in the second sub-page (P30B).

8. Method according to Claim 1, in which the first sub-page (P30A) is intended to be used by a first user (UA) and the second sub-page (P30B) is intended to be used by a second user (UB), different from the first user,
the first, respectively second, sub-page (P30A) comprising a user interface for inputting identification and/or authentication data for the first, respectively second, user (UA).

9. Method according to Claim 1, in which the second software module (S30BC) consults the local database (40) in order to detect in it the presence of data recorded by the first software module (S30AC), to be read by the second software module (S30BC).

10. Method according to Claim 1, comprising a step for reading by the first software module (S30AC) data written in said local database (40) by the second software module (S30BC).

11. Method according to Claim 10, in which the first software module (S30AC) consults the local database (40) in order to detect in it the presence of data recorded by the second software module (S30BC), to be read by the first software module (S30AC).

12. Browsing device (20) for the implementation of a first web application associated with a first browsing domain (D30A) and of a second web application associated with a second browsing domain (D30B), different from the first browsing domain,
the browsing device (20) accessing a local database (40) specific to the browser (20), said local database being designed for recording data supplied by a software module loaded into said browser (20) and to prohibit access to the data recorded for a software module associated with a browsing domain (D30C) to any software module loaded into the browser (20) which is not associated with said browsing domain (D30C),
the browsing device comprising:
- means for loading and for displaying concurrently at least two sub-pages (P30A, P30B) of an initial web page (P30), a first sub-page (P30A) being used for displaying a user interface for the first web application, a second sub-page (P30B) being used for displaying a user interface for the second web application being executed independently of the first web application,
- means for executing a first software module (S30AC) of the first web application, designed for storing data in said local database (40);
- means for executing a second software module (S30BC) of the second web application, designed for reading data written into said local database (40) by the first software module (S30AC),
the first and second software modules (S30AC, S30BC) being associated with a third browsing domain (D30C).

13. Computer program on an information medium, comprising instructions for implementing the steps of the communication method according to any one of Claims 1 to 11 when the program is executed by a data processor.
